# EUROPEAN PATENT SPECIFICATION

(11) **EP 2 568 462 B1**
(45) Date of publication and mention of the grant of the patent: **09.11.2016**
(21) Application number: 12184280.1
(22) Date of filing: 27.11.2006
(51) Int. Cl.: G09B 29/10, B60K 35/00, B60K 37/06, G01C 21/36

(54) **Handheld computer device with display which adapts to the orientation**
Tragbare Computervorrichtung mit Anzeige, die sich an die Ausrichtung anpasst
Dispositif informatique portatif avec affichage qui s'adapte à l'orientation

(43) Date of publication of application: 13.03.2013
(62) Divisional of application: 06024538.8
(73) Proprietor: Harman Becker Automotive Systems GmbH, 76307 Karlsbad (DE)
(72) Inventor: Roessger, Peter, 72631 Aichtal (DE); Ohler, Jens, 76307 Karlsbad (DE)
(74) Representative: Grünecker Patent- und Rechtsanwälte PartG mbB

(56) References cited:
- EP-A- 1 457 868
- EP-A1- 1 862 883
- EP-A1- 2 508 976
- EP-A1- 2 541 389
- WO-A1-2004/017188
- DE-A1- 10 056 846
- GB-A- 2 386 488
- JP-A- 11 051 662
- US-A1- 2004 259 599
- US-A1- 2005 020 325
- US-A1- 2005 068 304
- US-B1- 6 411 502
- ANONYMOUS: "Image orientation sensing and correction for notepads", RESEARCH DISCLOSURE, MASON PUBLICATIONS, HAMPSHIRE, GB, vol. 347, no. 88, 1 March 1993 (1993-03-01), XP007118863, ISSN: 0374-4353

## Description

### TECHNICAL FIELD OF THE INVENTION

The invention relates to a handheld computer device capable of providing navigation guidance.

### BACKGROUND OF THE INVENTION

The association of GPS receivers with handheld computer devices, such as pocket PCs, Personal Device Assistants (PDAs), and mobile phones, has lead to small and easy to use Personal Navigation Devices (PND) that are becoming a standard equipment of every vehicle, providing navigation guidance in either terrestrial, marine or air environments. The incorporation of extra functionalities, such as barometric altimeters, increases the offer of PND specially conceived for outdoor use and matching navigation needs of recreational users.

Existing PNDs already include touch panel displays, providing an intuitive operation of the device and an easy input of instructions, such as travelling destination, preferred map views, menus navigation, etc. Current layouts also deliver a user-friendly operation by positioning the basic control keys around the screen for easy reach. Most PNDs are equipped with a display screen of rectangular shape, rigidly mounted in either a landscape or a portrait orientation, in which the longer screen edge is either parallel or transverse to the line of sight, respectively.

Navigation devices devised to be permanently integrated in a vehicle have been proposed with a mechanism that allows the navigation device to rotate around a support base, either to allow the melding of the navigation device into a vehicle dashboard or to adjust the view angle of the screen with respect to the driver.

European patent application EP 2 541 389 A, published under Article 54(3) EPC, describes a method, comprising: at a portable electronic device with a touch screen display: detecting a first gesture on the touch screen display; responding to the first gesture by displaying a first soft keyboard, the first soft keyboard containing a plurality of keys, the plurality of keys in the first soft keyboard including primarily letter keys, the plurality of keys in the first soft keyboard including a first keyboard selector key for selecting a second soft keyboard different from the first soft keyboard; detecting a second gesture on the touch screen display; responding to the second gesture by displaying the second soft keyboard, the second soft keyboard containing a plurality of keys, the plurality of keys in the second soft keyboard including: number keys, a first group of non-letter keys, and a second keyboard selector key for selecting the first soft keyboard; detecting a third gesture on the touch screen display; and responding to the third gesture by displaying a third soft keyboard that is different from the first soft keyboard and the second soft keyboard, wherein: the third soft keyboard is made up of a second group of non-letter keys and symbols and includes at least one non-letter key of the first group of non-letter keys; the first soft keyboard includes a key that, when activated, capitalizes the next letter chosen; the second soft keyboard includes a key that, when activated, initiates display of the third soft keyboard; and when the second soft keyboard is displayed, the key that, when activated, initiates display of the third soft keyboard is displayed at a location on the touch screen display that was previously occupied by the key in the first soft keyboard that, when activated, capitalizes the next letter chosen.

European patent application EP 2 508 976 A1, published under Article 54(3) EPC, describes a portable electronic device, comprising: a touch screen display; one or more processors; memory; and one or more programs, wherein the one or more programs are stored in the memory and configured to be executed by the one or more processors, the one or more programs including instructions for: displaying at least a portion of a structured electronic document on the touch screen display, wherein the structured electronic document comprises a plurality of boxes of content; detecting a first gesture at a location on the displayed portion of the structured electronic document; determining a first box in the plurality of boxes at the location of the first gesture, the first box having a first size; enlarging and translating the structured electronic document so that the first box is substantially centered on the touch screen display at a second size greater than the first size; while the first box is enlarged, detecting a second gesture on the enlarged first box; and in response to detecting the second gesture, reducing in size the displayed portion of the structured electronic document.

Patent application US 2005/020325 A1 relates to a device having a keypad with a layout that can be changed between a numeric keypad and a QWERTY keypad by switching the flip cover between a portrait configuration and a landscape configuration.

Patent US 6 411 502 B1 relates to a portable electronic device having input keys for data entry. The input keys include indicia identifying the function of each key, the indicia being aligned at an angle with respect to the longitudinal axis of the housing. Such angular alignment of the indicia enable the indicia to be easily viewed when the housing is held within the hand of a user at a vertical alignment or mounted upon a console in a horizontal alignment.

Patent application WO 2004/017188 A1 relates to a small computing device having an interface which includes a screen extending lengthwise along the device and a row of keys on either side of the screen. The keys are multi-function keys, the function of a particular key at any time being designated by an operating mode of the device.

Patent application US 2005/068304 A1 relates to a data processing apparatus comprising a body with two groups of control elements for entering data and performing control operations, and a display that can be used in two different positions. Both groups of control elements are exposed when the display is in a first position, whereas only the second group of control elements is exposed when the display is in the second position.

Patent application DE 100 56 846 A1 relates to a map position display system capable of displaying a map that can position itself on the screen, i.e. to carry out a rotation in relation to an axis perpendicular to the screen, in terms of the geographical orientation of the device with respect to the magnetic North.

European patent application EP 0 976 616 A1 describes a monitor arrangement for integration in a vehicle, which includes a base and an image screen that can be pivoted across the base. The pivoting of the image screen allows the monitor to be placed in a stowage compartment when not in use or over the ventilation grid for operation purposes. In the working position, the screen visibility can be adapted by changing the angle of the image screen with respect to the viewer.

Japanese patent application JP-11051662 describes a display device with a portrait orientated display screen, which can be discretely kept inside a console panel of the automobile when not in use. In order to meet design constrictions imposed by the dimensions of the console panel and of the display screen, a mechanism is devised for allowing the display screen to be rotated from the working orientation to a landscape orientation, so that the display member can fit and be returned back to the console.

However, such rotation functionalities have been proposed so far to solve problems related with design criteria of the vehicles and the dimensions of the PNDs.

The rapid diversification of content and types of information available in PNDs, has lead to situations in which certain orientations of the display screen has advantages over the others, depending on the information being displayed or the interaction needs of the user. For example, the visualization of a 2.5D map or the choice of a Point Of Interest (POI) overlaid onto a map view is made easier in a landscape-oriented display. In contrast thereto, the portrait orientation is more convenient for displaying an advised route on a guiding map, in which the current position is normally displayed in the lower part of the screen and the travelling destination oriented to the upper part.

Consequently, there is an increasing need for handheld computer devices that can provide a variety of navigation information and that allows the user to choose the orientation of the display screen according to the contents being viewed and to the user's interaction needs.

Additionally, since the navigation needs of the user change frequently during the course of a trip, it is desirable that the user may easily change the orientation of the display screen with the device in an operating state and with a minimum of distraction.

### SUMMARY OF THE INVENTION

The present invention aims at overcoming the disadvantages and shortcomings of the prior art systems.

It is therefore an object of the present invention to provide a handheld computer device particularly suited for providing navigation guidance, whose orientation can be easily changed by the user and the displayed information adapted to the current display orientation while the device is in an operative state.

This object is solved by the invention as claimed in the independent claim. Advantageous embodiments of the invention are defined by the dependent claims.

In the sense of the present invention, a handheld computer device refers to any electronic device which includes both the functionality of a computer and of being portable, such as mobile phones, smart phones, watches, personal digital assistants, personal navigation devices and the like. Although the handheld computer device is devised to be portable, that is to be transported without effort by the user, it might be adapted to be integrated into a fixed unit installed in a vehicle, and easily detachable for being transported. Additionally, the handheld computer device may include other functionalities, such as those of a cell phone, a music player, a camera, and the like.

According to an an illustrative example for understanding the present invention a handheld computer device for displaying information content is provided, comprising a navigation unit for receiving signals indicative of geographical location coordinates from a positioning system unit and for outputting signals indicative of the geographical location of the handheld computer device, a display unit for displaying information content, wherein the orientation of the display unit is changeable, and a control unit for controlling the display unit, wherein the control unit is configured for receiving an orientation signal indicative of the orientation of the display unit and for adapting the orientation of the display of the information content in response to the orientation signal.

The display unit may be rigidly attached to the handheld computer device, in this case both the display unit and the handheld computer device being rotated as a whole. Alternatively, the display unit may be rotatable with respect to the handheld computer device body, for example, by rotating around a pivot base.

According to the above configuration, when the orientation of the display unit is rotated in a certain direction by a certain amount with respect to a viewer, the control unit will receive a signal indicative of the current spatial orientation or the change of orientation of the display unit and accordingly adapt the orientation of the display of information content so that the orientation of the displayed information remains constant with respect to the viewer. The information content may include images, map views, menus, text information, and the like. The convenience for the user is therefore increased, since the rotation of the display unit causes an adaptation of the orientation of the displayed information content according to user's preferences or interaction needs.

In an illustrative example for understanding the invention, the display unit is adapted to be rotated in a plane defined by the display unit from a first orientation to a second orientation and the control unit is further adapted to select different information content to be displayed depending on the orientation of the display unit.

According to the above configuration, the change of orientation of the display unit does not lead to an adjustment of the size or rescaling of the information content to the dimensions of the current display window but to a selection of the content of information to be displayed according to the current orientation of the display unit.

For instance, if a map view is being displayed in a landscape orientation and the display unit is rotated to a portrait orientation, the scale size of the map view will be maintained while new map data, not displayed in the previous orientation, will be displayed along the longer edge of the display window. Consequently, there is the advantage that the change of orientation of the display unit does not lead to a change of zoom of the map view and the viewer is able to continue viewing the advised route both with the same degree of detail as before rotating the display screen and with increased information in the direction of the user's preference.

According to another illustrative example for understanding the present invention, the handheld computer device comprises access means for accessing a storing medium storing geographical navigation data and the control unit is further adapted to retrieve the geographical navigation data from the storing medium via the access means and to determine the geographical navigation data to be displayed based on the orientation signal indicative of the orientation of the display unit.

The geographical navigation data may include any type of spatial and/or timing data suitable for determining the current location of the handheld device, for providing navigation guidance, such as advised routes, destination points, map data of cities, countries, geographical data including altitude, barometric information, weather and the like. The storage medium may be incorporated in the handheld computer device or provided as a separate storage medium, such as a server, a memory card, a flash memory, a CD, a DVD, or any other type of portable storage medium. The access means are any means suitable for accessing internal storage medium, such as an internal bus, a connection of the control unit to an internal memory, or an input/output interface suitable for accessing an external storage medium, such as a USB port, a network interface for accessing a server, wired or wireless communications means, and the like.

The above configuration has the advantage that geographical navigation data can be downloaded on demand by the user from a server or kept in an external portable storage medium. Additionally, the control unit retrieves the geographical data according to the display orientation, leading to an increased economy of memory space in the handheld computer device.

In a further illustrative example for understanding the present invention, the handheld computer device comprises an orientation detection unit for automatically detecting the orientation of the display unit and for outputting to the control unit the orientation signal indicative of the orientation of the display unit. The control unit is adapted to process the orientation signal indicative of the orientation of the display unit and to adapt the display of information in response to the orientation signal.

Consequently, the user only has to rotate the display unit to the desired orientation, and the display of information is automatically adapted without the need of further instructions from the user. This configuration is particularly advantageous in situations where the attention of the user is continuously demanded by other tasks, such as when driving a vehicle.

According to a further illustrative example for understanding the invention, the detection unit comprises a gravity sensor adapted to detect the spatial orientation of one point of the display unit with respect to another point of the display unit. In the case of a rectangular display window, the orientation of the display may be detected by determining which edge of the display unit is lower than the others.

According to another illustrative example for understanding the present invention, the handheld computer device comprises a user machine interface for receiving an input of the orientation of the display unit and for outputting to the control unit the orientation signal indicative of the orientation of the display unit.

For example, in personal navigation devices designed for outdoor use and to be carried attached to a part of the body, such as in the wrist, it may be desirable to use the manual mode to avoid a rotation of the displayed images induced by the body movement.

In a further illustrative example for understanding the invention, the user machine interface is further adapted for receiving an instruction for activating or deactivating one of the automatic mode of detection of the orientation of the display unit and the manual mode of input of the orientation signal indicative of the orientation of the display unit.

According to the above configuration, the handheld computer device may include the functionalities of an automatic detection and of a manual input of the orientation of the display unit, the user interface allowing the user to select the preferred mode. Additionally, the user may deactivate or activate any of the modes. Alternatively, the device may include only one of the automatic or the manual modes of detection, the user machine interface allowing the user to deactivate or activate the detection mode when necessary.

For instance, for navigation devices installed in aircraft or marine vehicles, the automatic rotation of the displayed information is not always desirable, namely when the vehicle undergoes rapid manoeuvres. Therefore, it is advantageous to be able to deactivate the automatic detection and/or to switch to a manual mode when necessary.

According to another illustrative example for understanding the present invention, the handheld computer device further comprises a key panel for inputting instructions, wherein the orientation of the key panel is changeable, the key panel comprising at least one key for inputting instructions, said key having at least one label corresponding to at least one orientation of the key panel. The key panel further comprises at least one illumination component for illuminating each label corresponding to an orientation of the key panel, and an illumination control unit for selectively activating the illumination component in response to the orientation of the key panel. The key panel may be incorporated in the display unit, being rotated when the display unit is rotated, or incorporated in the handheld computer device.

According to the above configuration, when the key panel is rotated with respect to the viewer, only the labels associated with a given orientation are illuminated or displayed to the user. Consequently, the user can easily identify the label and the function of each key, which greatly facilitates the operation of the key panel by the user in all circumstances.

In another advantageous illustrative example for understanding the invention, the handheld computer device comprises a front plate adapted to make invisible at least one of said labels.

According to another illustrative example for understanding the present invention, the handheld computer device comprises a key panel for inputting instructions, wherein the orientation of said key panel is changeable, the key panel comprising at least one key for inputting instructions, said key comprising a display screen for displaying at least one label corresponding to at least one orientation of the key panel. The key panel further comprises an illumination control unit for selectively activating the display of the label corresponding to the at least one orientation of the key panel in response to the orientation of the key panel. The display screen associated with each key may be a mini TFT display or any type of display suitable for displaying labels and icons.

In a further illustrative example for understanding the present invention, the user machine interface of the handheld computer device comprises a touch screen with at least one touch-sensitive zone for inputting instructions, the control unit being further configured to display at least one icon corresponding to the at least one touch-sensitive zone of the touch screen and to adapt at least one of orientation and position of the displayed icon based on the orientation signal indicative of the orientation of the display unit, and a correlation unit for correlating the at least one touch-sensitive zone of the touch screen with the at least one displayed icon.

According to this configuration, the convenience for the user is increased since when the touch screen is rotated, the orientation of the icon and the position where the icon is displayed is adapted to the current orientation of the display unit. When the touch screen is rotated, the position of a touch key associated with a specific function changes with respect to the touch screen in order to maintain the orientation of the touch keys with respect to the viewer. This is possible by correlating each touch sensitive zone with the displayed icons, which allows that a touch sensitive zone associated to a specific function will be always displayed at a similar relative location from the point of view of the viewer. In this way, it is maintained both the readability of the symbols and text displayed in association with a touch sensitive zone and the speed of selection of a touch key, since the user does not has to search for a specific touch key every time the display unit is rotated.

According to a further illustrative example for understanding the invention, a handheld computer device is provided, wherein the navigation unit, the display unit, the control unit and the user machine interface are adapted to be integrated in a vehicle head unit and are connected with each other by a data bus.

According to another illustrative example for understanding the invention, the positioning system unit outputs to the navigation unit signals delivered by a satellite positioning system. The satellite positioning system may be the Global Positioning System (GPS) or any other satellite based positioning system appropriate for providing positional or navigation information.

It should be noted that the above-explained embodiments might be applied to any handheld computer device adapted to provide navigation guidance, such as pocket PCs, personal navigation devices, personal assistant device, mobile phones, and the like.

### BRIEF DESCRIPTION OF THE FIGURES

Further advantageous embodiments of the present invention will be described in more detail with reference to the accompanying figures and drawings, in which:
- **Fig. 1**: schematically depicts a handheld computer device according to illustrative embodiments of the present invention;

- **Fig**. **2**: illustrates an example of rotation of the display unit and the adaptation of a map view to the orientation of the display unit;
- **Fig. 3**: shows a flow chart illustrating a process of adaptation of the displayed content to the orientation of the display unit;
- **Fig. 4**: illustrates an example of a key panel of a handheld computer device, in which only the key labels corresponding to a certain orientation of the key panel are illuminated.

### DETAILED DESCRIPTION OF THE INVENTION

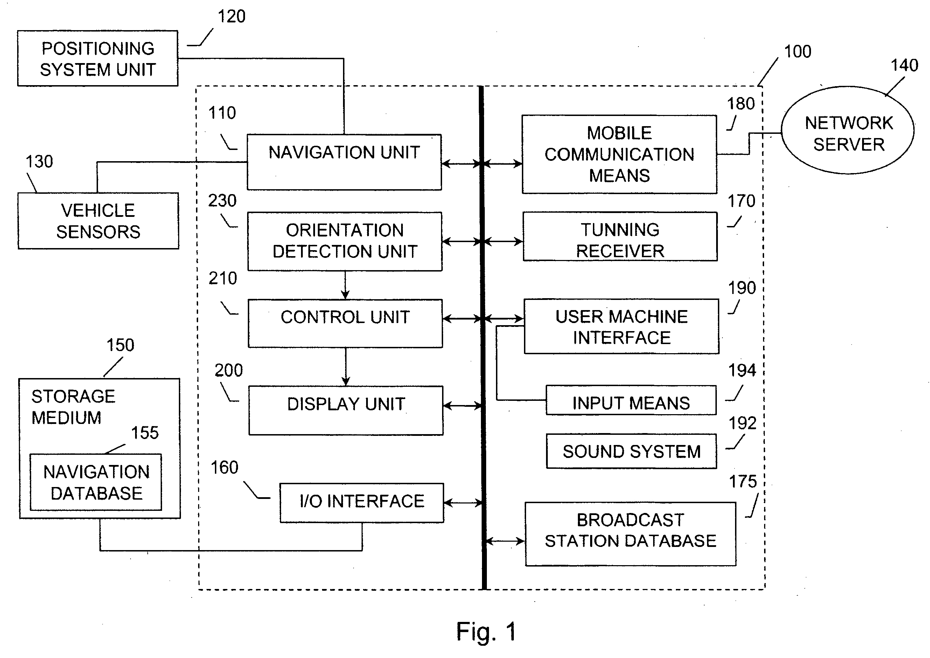

Figure 1 shows an overview of a handheld computer device 100 according to an advantageous embodiment of the present invention.

The handheld computer device 100 comprises a navigation unit 110 for receiving signals indicative of the device geographical location from a positioning system unit 120. These signals may be delivered to the positioning system unit 120 by a satellite positioning system and include positional and timing data that enable the handheld computer device 100 to determine its current position. Alternatively, the navigation unit 110 may receive from the positioning system unit 120 signals which already include data indicative of the geographical location of the device, such as latitude, longitude and altitude, and which are transmitted by an appropriate positioning system.

According to an advantageous embodiment, the navigation unit 110 uses the Global Positioning System (GPS) to determine the precise location of a vehicle, person, or other asset to which the handheld computer device 100 is attached and to record the position of the asset at regular intervals. The operation of the GPS system is well known to persons skilled in the art, such that no details have to be provided here for the purpose of understanding the present invention.

The data provided by the positioning system unit 120 are typically geographical coordinates in standardized form, which are detected in real time according to the device's location using satellite communication. The recorded location data can be stored within the navigation unit 110, or it may be transmitted to a central location data base, or internet-connected computer, using a cellular (GPRS), radio, or satellite modem embedded in the unit. This allows the asset's location to be displayed against a map backdrop either in real-time or when analysing the track later, using customized software.

Additionally, the navigation unit 110 may permanently receive and decode other signals related to the asset's position. For instance, for the purpose of vehicle navigation guidance, the navigation unit 110 may receive and analyze information provided by vehicle sensors 130, such as a wheel sensor and a gyrocompass, to calculate current position and route data of the vehicle.

Moreover, as will be appreciated by those skilled in the art, the navigation unit 110 may operate in that it receives a user's input relating to a destination, then calculates the respective route and outputs map data and/or indications for guiding the user along the route from a start point to the desired destination. Alternatively, the one or more routes may be entered in advance and the current position of the handheld device is compared with the initially entered route, wherein a deviation may be reported to the user.

The positioning system unit 120 may be incorporated in the handheld computer device 100 or, as illustrated in Fig. 1, be an external positioning system receiver to which the handheld computer device 100 accesses through suitable communication means embedded in the navigation unit 110, such as Bluetooth®, USB, serial, or the like.

It may also be devised that the navigation unit 110 provides navigation guidance based on the determination of routes or other navigation related information that take place at an external device, for instance, a server computer 140 that receives and communicates data from and to the navigation unit 110, respectively, by wired or wireless communication means (180).

As shown in figure 1, the handheld computer device 100 accesses to a navigation database 155 stored in an external storing medium 150, such as a computer server or the like, and is able to read/write digital data from/to the storage medium 150. The storing medium 150 can be any form of mass storage, such as flash memory, memory card, CD ROM, DVD, hard disk or the like, for storing and providing navigation data, such as map data relating to a geographical location, route data, altitude, and the like. However, the navigation database 155 may also be provided local to the device, contained in a storage medium fully integrated in the navigation unit 110.

The access means 160 are any means suitable for accessing internal storage medium, such as an internal BUS, a connection of the control unit 210 to an internal memory, or an input/output interface 160 suitable for accessing the external storage medium 150, such as a USB port, a network interface for accessing a server, wired or wireless communications means, and the like.

By using the navigation data provided by the navigation database 155, the navigation unit 110 is able to output map views, including 2D, 2.5D and 3D maps, showing the present location and the vicinity around the location of the device. Other geographical related data might be provided, including altitude, water depth, maps of recreational lakes, pedestrian navigation for parks and city centres. Additionally, the navigation database 155 may also provide information on other types of services related with location, such as a list of broadcast stations with good reception quality, and/or provide information on particular points of interest for the user along the route, such as pharmacies, restaurants, gas stations, and the like.

The handheld computer device 100 may further comprise a tuning receiver 170 for broadcast reception, such as an analog AM/FM or digital DAB (digital audio broadcast) tuner or an analog or digital television tuner. These components provide information on traffic conditions, weather reports and forecasts, and/or entertainment to the user. The primary function of the tuning receiver 170 is to receive broadcast signals of a broadcast station selected by the user. To this end, the receiver searches the frequency band for available broadcast stations, preferably provides a list of available stations and tunes its receiving unit to a selected station. Moreover, the tuning receiver 170 typically comprises a mechanism to either simultaneously search during reproduction of a program for further available stations or includes a background tuner, which continuously scans the available frequency band for broadcast stations with good reception properties. To assist the search operation, the tuning receiver 170 may decode any additional information provided in the broadcast signal, such as digital data included in the broadcast station signal. For instance, digital radio receiver information is included in an RDS (Radio Broadcast System) data stream for providing traffic information, broadcast information, etc.

Hence, the tuning receiver 170 is permanently and continuously scanning the available frequency bands to collect data on receivable broadcast stations. This data is stored in local databases. Additionally, there exists a broadcast station database 175, e.g. for storing data on the television or radio broadcast stations including frequencies, names and position information of the broadcast stations.

Generally, the local and broadcast station databases 175 may be installed as integral parts of the tuning receiver 170, for example, as an SD RAM or flash memory or as any part of the handheld computer device 100.

As broadcast stations transmitting one and the same program can be identified by their station ID (PI-Code in the radio broadcast RDS System, in the case of a television tuner, the video text signal may provide a channel ID for this purpose), the database can be structured or ordered either automatically or according to the user's preferred selection with respect to desired broadcast stations or their operational parameters. The receivable broadcast stations may be displayed in the device's display unit, for example in the form of a list from which the user may select the desired station by scrolling the list using a mouse or keys provided in the device or by directly inputting the selected station via touch, in the case of devices comprising a touch screen.

As illustrated in Fig. 1, the handheld computer device 100 includes mobile communication means 180 for receiving speech and data signals according to an applicable standard, such as GSM, UMTS or others. However, instead of an integrated mobile communication unit, the handheld computer device 100 may simply include communication interface means that enable a wired or wireless connection of the handheld device to, for instance, a mobile telephone. As will be appreciated by a person skilled in the art, the mobile communication means 180 communicates wirelessly within a cellular network system, comprising one or a plurality of broadcast stations (called base stations) for receiving and/or sending speech or data information to and from other wireless or wired communication units, such as a network server 140 or user terminals.

The handheld computer device 100 illustrated in Fig. 1 further comprises a user machine interface 190 that includes a sound system 192 and input means 194. The input means 194 are any means suitable for receiving instructions input by the user and may include any of a keyboard, a joystick, a key panel, a scroll mouse, a speech recognition module, and/or a touch screen panel for inputting instructions by touch. The sound system 192 may be installed as a separate unit or module. The user machine interface 190 may output route and/or traffic information e.g. in visual form to a display unit 200.

The display unit 200 can be either a separate display for outputting this information or can be of a split type showing the information together with operational information of other components of the system, such as data relating to the audio system, warning messages relating to a hazardous condition or the position of the vehicle. Alternatively, the route and/or traffic information is output in the form of audible signals, which are generated by a voice generation module and output by the sound system 192.

The display unit 200 comprises a display screen or display window for displaying information pertaining to the use of the handheld computer device 100, such as information on the device status, configuration options+ menus, and information related with navigation guidance. The display can be an LCD, or any other type of display suitable for displaying information.

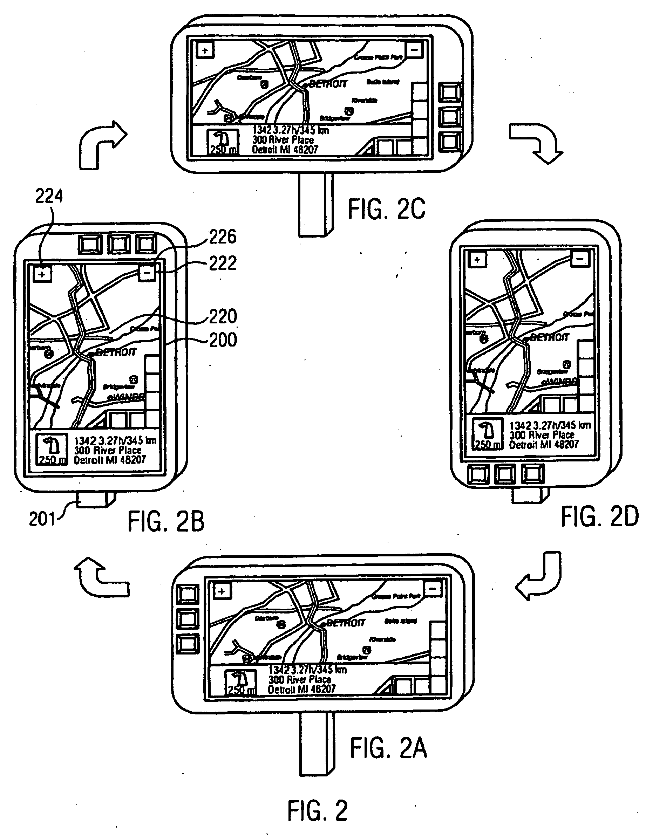

According to the present invention, the orientation of the display unit 200 can be changed with respect to the viewer. As shown in Fig. 2, the display unit 200 is mounted on a base or pivot around which it can be rotated. However, the display unit 200 may be rigidly integrated on the handheld device, its orientation being changed when the handheld computer device 100 is rotated or alternatively, the display unit 200 may be made rotatable with respect to the handheld computer device 100.

The adaptation of the content and the orientation of the information to be displayed are controlled by a control unit 210 in response to an orientation signal indicative of the orientation of the display unit 200. The orientation signal can indicate the current display orientation or a change of orientation of the display unit 200.

As illustrated in Fig. 2, the display unit 200 is rotatable in any direction in a plane defined by the display unit 200. The orientation of the map view is adapted to each new orientation of the display unit 200, in a way that the orientation of the displayed content remains the same with respect to the viewer.

As illustrated in Fig. 2A, when the handheld computer device 100 is displaying a two-dimensional (2D) map view in a landscape orientated display, giving indications on a advised route that is displayed starting from the current location at the bottom part of the display towards the destination at the upper part of the display, it might become advantageous at a certain moment of the travelling to view more map data in the direction of travelling than in the direction transverse to the advised route while maintaining the same degree of zoom. Thus, when the viewer rotates the display unit 200 of 90° to a portrait orientation (Fig. 2B or Fig. 2D), the control unit 210 instructs the adaptation of the map view orientation to the current orientation of the display window. Additionally, since in the portrait orientation the edge of the display window along the travelling direction is longer, the control unit 210 will also adapt the content of information to be displayed, such as geographical and position data, to the current dimensions of the display unit 200 in each direction. Therefore, in the current portrait orientation more navigation information is displayed along the travelling direction (aligned with the longer edge of the display window) than in the previous landscape orientation, in which more information was displayed in the transverse direction.

In a similar manner, if the user is using the display unit 200 in a portrait orientation (Fig. 2B or Fig. 2D) and needs to obtain more information about POI around the current location, the user may rotate the display unit 200 to a landscape orientation, in which the longer edge is aligned in the direction transverse to the travelling direction (Fig. 2A or Fig. 2D). In such a case, the information of POI to be retrieved by the control unit 210 is selected according to the edge size of the display window, since more information on POI can be displayed in the direction transverse to the travelling direction than in the previous orientation, in which more POI were being displayed along the travelling direction.

Consequently, when the lateral dimensions of the display window are not the same, the size of the display window edges in a given direction changes when the display unit 200 is rotated, and the information content being displayed is adapted in order to maintain the scale of the map view and to display more information along the longer edge of the display window. Therefore, the viewer is able to continue viewing the advised route with the same degree of detail as before rotating the display screen and with increased information in the direction of his/her needs.

The above example was described with reference to a display unit 200 that can be rotated in a plane defined by the display unit 200. However, a skilled person will recognize that the display unit 200 or the handheld device may be made movable in any direction with respect to the viewer or its attaching base in order to improve the visibility angle of the display screen with respect to the viewer, avoid undesirable effects from light reflexions, fit the device inside a case when not in use, etc. Moreover, the display unit 200 may rotate asymmetrically around a pivot base. A mechanism may also be incorporated for allowing the angle of the plane defined by the display unit 200 to be changed with respect to the viewer in order to adapt the display visibility to the particular circumstances where the device 100 is being employed.

Additionally, the user machine interface 190 may include a touch screen 220 with at least one touch sensitive zone 222 for the input of instructions by contact or touch with a contact body. The touch sensitive zones are active regions of the touch screen 220 that may be activated by any means induced by contact, such as contact pressure and infrared radiation. In association with each touch key is displayed a label or icon 226 indicative of the specific function that is activated when the respective touch sensitive zone is touched. As illustrated in Fig. 2, the touch keys for increasing 222 and decreasing 224 the zoom of the map view are identified by the labels "+" and "-", respectively.

The display of the icons or labels specifying the function of each touch key is controlled by the control unit 210, which adapts the orientation and position of the display of the touch key icon based on the orientation signal indicative of the current orientation of the display unit 200. Additionally, since the rotation of the display unit 200 causes the position of a same active region in the touch screen 220 to change with respect to the viewer, the handheld computer device 100 comprises a correlation unit 240 that correlates each active region or touch sensitive zone of the touch screen 220 with the icon being displayed and with touch key function specified by the displayed icon.

Therefore, when the display unit 200 is rotated, each label is adapted to be displayed with the same orientation and position with respect to the viewer and correlated with the active region of the touch screen 220 corresponding to the location where the label is being displayed. In this way, a touch key associated with a specific function is always displayed at the same position or with the same orientation with respect to the viewer and the user does not have to search for a specific touch key on the touch screen 220 every time the display unit 200 is rotated. For example, the active region of the touch screen 220 located at the upper left corner of the display unit 200 in Fig. 2B, and identified by the label "+", is located at the upper right corner of the display unit 200 in Fig. 2C. However, irrespective of the display unit orientation, the control unit 210 instructs that the icon "-" be always displayed at the upper right corner of the display window with respect to the viewer and the correlation unit 240 correlates the active region at this location with the function specified by the icon "-". Consequently, the user will be able to decrease the zoom of the map view by touching always on a touch key 222 at the upper right corner of the display window, irrespective of the orientation of the display unit 200.

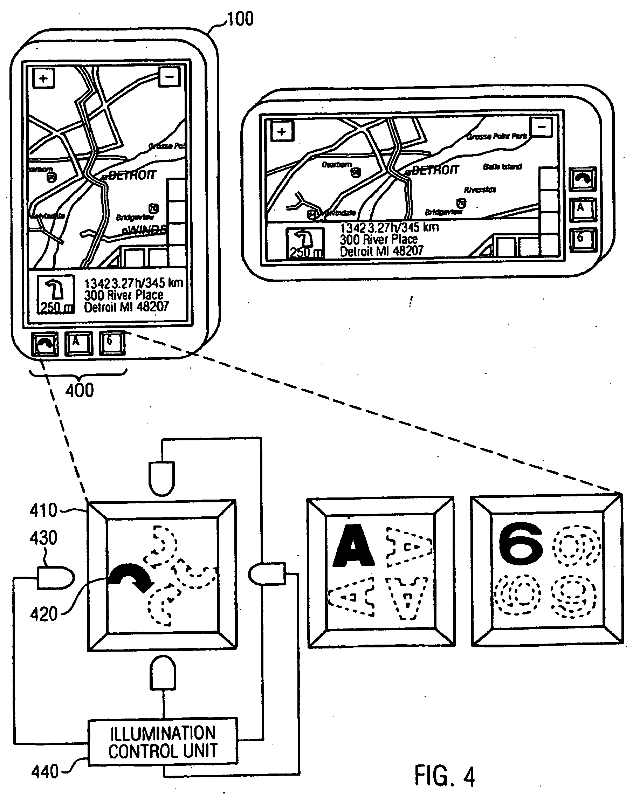

According to an advantageous embodiment, the orientation signal is generated by an instruction input by the user via the user machine interface means 190. For example, as shown in Fig. 4, the handheld computer device 100 may comprise a rotate key 410 that causes the displayed map view to rotate by 90° under manipulation of the rotate key 410. Instead of the rotate key 410, the user machine interface 190 may include other keys for instructing on the display orientation, such as keys for selecting between a portrait and a landscape orientation, keys for introducing digits and/or alphanumeric characters and inputting a rotation angle or rotate instruction, respectively, and the like. The orientation of the displayed information may also be instructed by voice via a voice recognition module.

According to another advantageous embodiment, the handheld computer device 100 may comprise an orientation detection unit 230 for automatically detecting the rotation of the display unit 200 and for outputting to the control unit 210 the orientation signal indicative of the display unit rotation.

The orientation detection unit 230 may comprise any means suitable for detecting the rotation of rigid bodies and which are well known for those skilled in the art. For instance, a switching mechanism between portrait and landscape orientation display can be devised by incorporating a switch in the base 201 around which the display unit 200 can be pivoted, the switch being mechanically pressed when the display unit 200 is in the portrait orientation and therefore producing an signal indicative of this orientation.

In another possible configuration, the orientation detection unit 230 comprises gravitation-controlled detectors well known in the art. The mechanism of detection may be based on the weight of an element internal to the gravitation-controlled detector, such as the displacement of a drop of mercury inside a sealed compartment that is incorporated in the display unit 200. When the display unit 200 is rotated, the mercury drop moves under the action of gravity and wets a particular electrical contact at certain orientations, producing an electric signal indicative of the display unit orientation.

Alternatively, a mechanism based on piezoelectricity or strain gauge may be provided, wherein the differential weight of an element of the display unit 200 is determined. For example, it might be devised a configuration of three piezoelectric sensors disposed along three mutually perpendicular directions within the plane of the display unit 200, each sensor measures the gravitation force in the respective direction. These three measured quantities together yield the overall spatial orientation of the display unit 200 with respect to the direction of gravity.

The automatic detection of orientation and the input mode by the user may be simultaneously provided in the handheld computer device 100, the user machine interface 190 including means for allowing a selection between the desired detection modes. Additionally, the user interface may further allow the activation or deactivation of one or both of the detection modes.

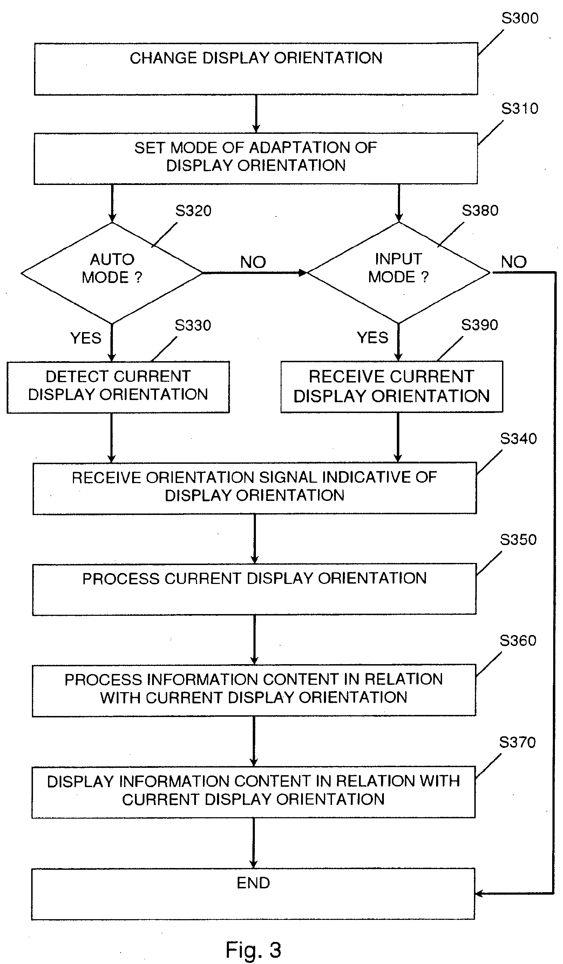

Fig. 3 illustrates an example of a method for adapting the displayed information content to the orientation of the display unit 200 according to an advantageous embodiment, in which the handheld computer device 100 includes both the automatic mode and the input mode of the display unit orientation. After the handheld computer device 100 receives signals indicative of the geographical location of the device and outputs position data according to the device location, information content providing navigation guidance or other types of information content related with the device location is selected and processed by the control unit 210 for being displayed in the display unit 200.

After changing the orientation of the display unit (S300), the user selects the detection mode of the orientation of the display unit (S310). However, the detection mode may also be selected before rotating the display unit (200).

If the user selects the automatic mode (S320), the orientation detection unit 230 detects automatically the orientation or change of orientation of the display unit 200 and outputs to the control unit 210 an orientation signal indicative of the orientation or change orientation of the display unit (S330). The control unit 210 receives the orientation signal (S340) and processes the received signal for determining the current orientation of the display unit (S350). The information content to be displayed is processed by the control unit (S360), for adapting the orientation of the display of the information content to the current orientation of the display unit 200. Depending on the size of the display unit window, the control unit 210 may be configured for selecting and processing different information content to be displayed in response to the received orientation signal. Finally, the control unit 210 instructs the display of the processed information content in relation with the current display orientation (S370).

If the user selects the mode of inputting the orientation or change of orientation of the display unit (S380), the handheld computer device 100 waits for the user to input an instruction via the user machine interface means 190. When the instruction is received, the user machine interface means 190 outputs to the control unit 210 an orientation signal indicative of the display orientation or change of the display orientation (S390). Once the orientation signal is received by the control unit 210, the process of adaptation of the displayed information content to the current orientation of the display unit 200 is the same as described for the automatic detection mode.

In case the user activates neither the automatic mode nor the input mode, the display of information content does not change with the rotation of the display unit 200.

As will be recognizable by those skilled in the art, the process described above can adapted for a handheld computer device 100 including only the automatic detection mode or the input mode.

Fig. 4 shows a handheld computer device 100 provided with a key panel 400 for enabling the input of instructions by the user. The key panel 400 may comprise one or more keys or buttons, each button 410 including at least one label 420 associated with a specific orientation of the key panel 400. In the example illustrated in Fig. 4, each button includes four labels disposed with different orientations and an illumination component 430 is provided for illuminating each label 420. The labels are selectively illuminated under control of an illumination control unit 440, which in response to an orientation signal indicative of the key panel 400 orientation activates the illumination component 430 associated with the specific label 420. The illumination control unit 440 may receive the orientation signal from the control unit 210, the orientation detection unit 230 and/or the input means.

The number of buttons comprised in the key panel 400, the number or type of labels associated with each button as well as the number of illumination components is not limited to the above example. Additionally, the selective illumination of the key panel 400 is not restricted to the above example and many other configurations known in the art may be implemented. For instance, it may be devised a configuration of light guides coupled to two, three or four LEDs, depending on the number of orientations of the labels, in order to illuminate simultaneously all the labels corresponding to the same orientation using the same illumination component. This configuration is particularly advantageous for key panels including arrays of buttons, since it allows a reduction on energy and heating costs.

In an alternate configuration, the buttons of the key panel 400 may be outfitted with mini-TFT screens for displaying icons, writings or labels on the buttons. In this case, an illumination control unit is provided for displaying the icons with an orientation correspondent to the orientation of the key panel 400.

Finally, it is clear to a skilled person in the art that the above-described embodiments can be combined with each other in an advantageous manner.

## Claims

1. A handheld computer device for displaying information content, comprising:
a navigation unit (110) adapted to receive signals indicative of geographical location coordinates from a positioning system unit (120) and for outputting signals indicative of the geographical location of the handheld computer device;
a display unit (200) adapted to display information content, wherein the orientation of said display unit (200) is changeable;
a user machine interface (190) comprising a touch screen (220) with at least one touch-sensitive zone (222) for inputting instructions;
a control unit (210) for controlling the display unit (200), wherein the control unit (210) is configured to receive an orientation signal indicative of the current orientation of the display unit (200) and to adapt the orientation of the display of the information content in response to the orientation signal,
said control unit (210) being further configured to display at least one label or icon (226) corresponding to the at least one touch-sensitive zone (222) of the touch screen (220) and to adapt at least one of orientation and position of the displayed label or icon (226) based on the orientation signal indicative of the current orientation of the display unit (200), each label or icon (226) being indicative of a specific function that is activated when the respective touch sensitive zone (222) is touched;
a correlation unit (240) for correlating the at least one touch-sensitive zone (222) with the at least one displayed label or icon (226) and with the touch key function specified by the displayed label or icon (226);
wherein the touch sensitive zones (222) are active regions of the touch screen (220) that are activated by contact or touch with a contact body; and
when the display unit (200) is rotated, the rotation of the display unit (200) causes the position of a same active region in the touch screen (220) to change with respect to a viewer, each label or icon (226) being adapted to be displayed with the same orientation and position with respect to the viewer and correlated with the active region of the touch screen (220) corresponding to the location where the label or icon (226) is being displayed such that a touch key associated with a specific function is always displayed at the same position or with the same orientation with respect to the viewer.

2. The handheld computer device according to claim 1, further comprising:
a key panel (400) for inputting instructions, wherein the orientation of said key panel (400) is changeable, said key panel (400) comprising:
at least one key (410) for inputting instructions, said key (410) having at least one label (420) corresponding to at least one orientation of the key panel (400);
at least one illumination component (430) for illuminating each label (420) corresponding to an orientation of the key panel (400); and
an illumination control unit (440) for selectively activating the illumination component (430) in response to the orientation of said key panel (400).

3. The handheld computer device according to claim 2, further comprising a front plate adapted to make invisible at least one of said labels (420).

4. The handheld computer device according to any of claims 1 to 3, wherein
said display unit (200) is adapted to be rotated in a plane defined by said display unit (200) from a first orientation to a second orientation;
said control unit (210) is further adapted to select different information content to be displayed depending on the orientation of the display unit (200).

5. The handheld computer device according to any of claims 1 to 4, further comprising:
access means (160) for accessing a storing medium, said storing medium storing geographical navigation data; wherein
said control unit (210) is further adapted to retrieve the geographical navigation data from the storing medium via the access means (160) and to determine the geographical navigation data to be displayed based on the orientation signal indicative of the orientation of the display unit (200).

6. The handheld computer device according to any of claims 1 to 5, further comprising:
an orientation detection unit (230) for automatically detecting the orientation of the display unit (200) and for outputting to the control unit (210) the orientation signal indicative of the orientation of the display unit (200); wherein
said control unit (210) is further adapted to process the orientation signal indicative of the orientation of the display unit (200) and to adapt the display of information in response to the orientation signal.

7. The handheld computer device according to claim 6, wherein said detection unit comprises a gravity sensor adapted to detect the spatial orientation of one point of the display unit (200) with respect to another point of the display unit (200).

8. The handheld computer device according to any of claims 1 to 7, wherein:
said user machine interface (190) is adapted to receive an input of the orientation of the display unit (200) and to output to the control unit (210) the orientation signal indicative of the orientation of the display unit (200).

9. The handheld computer device according to any of claims 1 to 8, wherein:
said user machine interface (190) is further adapted to receive an instruction for activating or deactivating one of the automatic mode of detection of the orientation of the display unit (200) and the manual mode of input of the orientation signal indicative of the orientation of the display unit (200).

10. The handheld computer device according to any of claims 1 to 9, wherein the navigation unit (110), the display unit (200), the control unit (210) and the user machine interface (190) are adapted to be integrated in a vehicle head unit and are connected with each other by a data bus.

11. The handheld computer device according to any of claims 1 to 10, wherein the positioning system unit (120) outputs to the navigation unit (110) signals provided by a satellite positioning system.

12. A method for displaying information content on an handheld computer device, comprising:
receiving signals indicative of geographical location coordinates and outputting signals indicative of a geographical location of the handheld computer device;
receiving an orientation signal indicative of a current orientation of a display unit (200) of the handheld computer device;
adapting the orientation of the display of the information content in response to the orientation signal and displaying the information content in accordance with said orientation of the display unit (200);
displaying at least one label or icon (226) corresponding to the at least one touch-sensitive zone (222) of the touch screen (220) and adapting an orientation and/or a position of the displayed label or icon (226) based on the orientation signal indicative of the current orientation of the display unit (200);
correlating the at least one touch-sensitive zone (222) with the at least one displayed label or icon (226) and with the function specified by the displayed label or icon (226),
wherein each label or icon (226) is indicative of a specific function that is activated when the respective touch sensitive zone (222) is touched; wherein
the step of adapting said orientation and/or position of the displayed label (226) comprises:
when the display unit (200) is rotated, the rotation of the display unit (200) causing the position of a same active region in the touch screen (220) to change with respect to a viewer, displaying each label or icon (226) with the same orientation and position with respect to the viewer and correlated with the active region of the touch screen (220) corresponding to the location where the label or icon (226) is being displayed such that a touch key associated with a specific function is always displayed at the same position or with the same orientation with respect to the viewer.

## Patentansprüche

1. Tragbare Computervorrichtung zum Anzeigen von Informationsinhalt, umfassend:
eine Navigationseinheit (110), die dazu angepasst ist, Signale zu empfangen, die geografische Positionskoordinaten von einer Positionierungssystemeinheit (120) angeben, und Signale auszugeben, die die geografische Position der tragbaren Computervorrichtung angeben;
eine Anzeigeeinheit (200), die dazu angepasst ist, Informationsinhalt anzuzeigen, wobei die Ausrichtung der Anzeigeeinheit (200) veränderbar ist;
eine Benutzermaschinenschnittstelle (190), umfassend einen Berührungsbildschirm (220) mit wenigstens einer berührungsempfindlichen Zone (222) zum Eingeben von Anweisungen;
eine Steuereinheit (210) zum Steuern der Anzeigeeinheit (200), wobei die Steuereinheit (210) zum Empfangen eines Ausrichtungssignals konfiguriert ist, das eine aktuelle Ausrichtung der Anzeigeeinheit (200) angibt, um die Ausrichtung der Anzeige des Informationsinhalts in Reaktion auf das Ausrichtungssignal anzupassen,
wobei die Steuereinheit (210) ferner dazu konfiguriert ist, wenigstens eine Markierung oder ein Symbol (226) anzuzeigen, die bzw. das der wenigstens einen berührungsempfindlichen Zone (222) des Berührungsbildschirms (220) entspricht, und wenigstens eine von der Ausrichtung und Position der angezeigten Markierung oder des angezeigten Symbols (226) auf Grundlage des Ausrichtungssignals anzupassen, das die aktuelle Ausrichtung der Anzeigeeinheit (200) angibt, wobei jede Markierung oder jedes Symbol (226) eine spezifische Funktion angibt, die aktiviert wird, wenn die jeweilige berührungsempfindliche Zone (222) berührt wird;
eine Korrelationseinheit (240) zum Korrelieren der wenigstens einen berührungsempfindlichen Zone (222) mit der wenigstens einen angezeigten Markierung oder dem wenigstens einen angezeigten Symbol (226) und mit der Berührungstastenfunktion, die durch die angezeigte Markierung oder das angezeigte Symbol (226) festgelegt wird;
wobei die berührungsempfindlichen Zonen (222) aktive Regionen des Berührungsbildschirms (220) sind, die durch Kontakt oder Berührung mit einem Kontaktkörper aktiviert werden; und
wenn die Anzeigeeinheit (200) gedreht wird, die Drehung der Anzeigeeinheit (200) bewirkt, dass die Position einer selben aktiven Region in dem Berührungsbildschirm (220) sich in Bezug auf einen Betrachter verändert, wobei jede Markierung oder jedes Symbol (226) dazu angepasst ist, mit derselben Ausrichtung und Position in Bezug auf den Betrachter angezeigt und mit der aktiven Region des Berührungsbildschirms (220) korreliert zu werden, die der Position entspricht, an der die Markierung oder das Symbol (226) angezeigt wird, derart, dass eine Berührungstaste, die einer spezifischen Funktion zugeordnet ist, stets an derselben Position oder mit derselben Ausrichtung in Bezug auf den Betrachter angezeigt wird.

2. Tragbare Computervorrichtung nach Anspruch 1, ferner umfassend:
ein Tastenfeld (400) zum Eingeben von Anweisungen, wobei die Ausrichtung des Tastenfelds (400) veränderbar ist, wobei das Tastenfeld (400) Folgendes umfasst:
wenigstens eine Taste (410) zum Eingeben von Anweisungen, wobei die Taste (410) wenigstens eine Markierung (420) aufweist, die wenigstens einer Ausrichtung des Tastenfelds (400) entspricht;
wenigstens eine Beleuchtungskomponente (430) zum Beleuchten jeder Markierung (420) entsprechend einer Ausrichtung des Tastenfelds (400); und
eine Beleuchtungssteuereinheit (440) zum selektiven Aktivieren der Beleuchtungskomponente (430) in Reaktion auf die Ausrichtung des Tastenfelds (400).

3. Tragbare Computervorrichtung nach Anspruch 2, ferner umfassend eine Frontblende, die dazu angepasst ist, wenigstens eine der Markierungen (420) unsichtbar zu machen.

4. Tragbare Computervorrichtung nach einem der Ansprüche 1 bis 3, wobei die Anzeigeeinheit (200,) dazu angepasst ist, in einer Ebene, die von der Anzeigeeinheit (200) definiert wird, aus einer ersten Ausrichtung in eine zweite Ausrichtung gedreht zu werden;
die Steuereinheit (210) ferner dazu angepasst ist, einen verschiedenen Informationsinhalt zur Anzeige abhängig von der Ausrichtung der Anzeigeeinheit (200) auszuwählen.

5. Tragbare Computervorrichtung nach einem der Ansprüche 1 bis 4, ferner umfassend:
Zugriffsmittel (160) zum Zugreifen auf ein Speichermedium, wobei das Speichermedium geografische Navigationsdaten speichert; wobei
die Steuereinheit (210) ferner dazu angepasst ist, die geografischen Navigationsdaten aus dem Speichermedium über das Zugriffsmittel (160) abzurufen und die geografischen Navigationsdaten zur Anzeige auf Grundlage des Ausrichtungssignals zu bestimmen, das die Ausrichtung der Anzeigeeinheit (200) angibt.

6. Tragbare Computervorrichtung nach einem der Ansprüche 1 bis 5, ferner umfassend:
eine Ausrichtungserkennungseinheit (230) zum automatischen Erkennen der Ausrichtung der Anzeigeeinheit (200) und zum Ausgeben des Ausrichtungssignals, das die Ausrichtung der Anzeigeeinheit (200) angibt, an die Steuereinheit (210); wobei
die Steuereinheit (210) ferner dazu angepasst ist, das Ausrichtungssignal, das die Ausrichtung der Anzeigeeinheit (200) angibt, zu verarbeiten und die Anzeige von Informationen in Reaktion auf das Ausrichtungssignal anzupassen.

7. Tragbare Computervorrichtung nach Anspruch 6, wobei die Erkennungseinheit einen Schwerkraftsensor umfasst, der dazu angepasst ist, die räumliche Ausrichtung eines Punkts der Anzeigeeinheit (200) in Bezug auf einen anderen Punkt der Anzeigeeinheit (200) zu erkennen.

8. Tragbare Computervorrichtung nach einem der Ansprüche 1 bis 7, wobei:
die Benutzermaschinenschnittstelle (190) dazu angepasst ist, eine Eingabe der Ausrichtung der Anzeigeeinheit (200) zu empfangen und das Ausrichtungssignal, das die Ausrichtung der Anzeigeeinheit (200) angibt, an die Steuereinheit (210) auszugeben.

9. Tragbare Computervorrichtung nach einem der Ansprüche 1 bis 8, wobei:
die Benutzermaschinenschnittstelle (190) ferner dazu angepasst ist, eine Anweisung zum Aktivieren oder Deaktivieren von einem von dem automatischen Erkennungsmodus der Ausrichtung der Anzeigeeinheit (200) und dem manuellen Modus der Eingabe des Ausrichtungssignals, das die Ausrichtung der Anzeigeeinheit (200) angibt, zu empfangen.

10. Tragbare Computervorrichtung nach einem der Ansprüche 1 bis 9, wobei die Navigationseinheit (110), die Anzeigeeinheit (200), die Steuereinheit (210) und die Benutzermaschinenschnittstelle (190) dazu angepasst sind, in einer Fahrzeugkopfeinheit integriert zu sein, und über einen Datenbus miteinander verbunden sind.

11. Tragbare Computervorrichtung nach einem der Ansprüche 1 bis 10, wobei die Positionierungssystemeinheit (120) Signale, die von einem Satellitenpositionierungssystem ausgegeben werden, an die Navigationseinheit (110) ausgibt.

12. Verfahren zum Anzeigen von Informationsinhalt an einer tragbaren Computervorrichtung, umfassend:
Empfangen von Signalen, die geografische Positionskoordinaten angeben, und Ausgeben von Signalen, die eine geografische Position der tragbaren Computervorrichtung angeben;
Empfangen eines Ausrichtungssignals, das eine aktuelle Ausrichtung einer Anzeigeeinheit (200) der tragbaren Computervorrichtung angibt;
Anpassen der Ausrichtung der Anzeige des Informationsinhalts in Reaktion auf das Ausrichtungssignal und Anzeigen des Informationsinhalts gemäß der Ausrichtung der Anzeigeeinheit (200);
Anzeigen von wenigstens einer Markierung oder einem Symbol (226), die bzw. das wenigstens einer berührungsempfindlichen Zone (222) des Berührungsbildschirms (220) entspricht, und Anpassen einer Ausrichtung und/oder einer Position der angezeigten Markierung oder des angezeigten Symbols (226) auf Grundlage des Ausrichtungssignals, das die aktuelle Ausrichtung der Anzeigeeinheit (200) angibt;
Korrelieren der wenigstens einen berührungsempfindlichen Zone (222) mit der wenigstens einen angezeigten Markierung oder dem wenigstens einen angezeigten Symbol (226) und mit der Funktion, die durch die angezeigte Markierung oder das angezeigte Symbol (226) festgelegt wird,
wobei jede Markierung oder jedes Symbol (226) eine spezifische Funktion angibt, die aktiviert wird, wenn die jeweilige berührungsempfindliche Zone (222) berührt wird; wobei
der Schritt des Anpassens der Ausrichtung und/oder Position der angezeigten Markierung (226) Folgendes umfasst:
wenn die Anzeigeeinheit (200) gedreht wird, Bewirken, dass die Drehung der Anzeigeeinheit (200) die Position einer selben aktiven Region in dem Berührungsbildschirm (220) in Bezug auf einen Betrachter verändert, Anzeigen jeder Markierung oder jedes Symbols (226) mit derselben Ausrichtung und Position in Bezug auf den Betrachter und korreliert mit der aktiven Region des Berührungsbildschirms (220), die der Position entspricht, an der die Markierung oder das Symbol (226) angezeigt wird, derart, dass eine Berührungstaste, die einer spezifischen Funktion zugeordnet ist, stets an derselben Position oder mit derselben Ausrichtung in Bezug auf den Betrachter angezeigt wird.

## Revendications

1. Dispositif informatique portatif pour afficher un contenu d'informations, comprenant :
une unité de navigation (110) adaptée pour recevoir des signaux indiquant des coordonnées d'emplacement géographique provenant d'un système de positionnement (120) et pour produire des signaux indiquant l'emplacement géographique du dispositif informatique portatif ;
un module d'affichage (200) adaptée pour afficher un contenu d'informations, dans lequel l'orientation dudit module d'affichage (200) est modifiable ;
une interface machine utilisateur (190) comprenant un écran tactile (220) avec au moins une zone à effleurement (222) pour saisir des instructions ;
une unité de commande (210) pour commander le module d'affichage (200), dans lequel l'unité de commande (210) est configurée pour recevoir un signal d'orientation indiquant l'orientation actuelle du module d'affichage (200) et pour adapter l'orientation de l'affichage du contenu d'informations en réponse au signal d'orientation,
ladite unité de commande (210) étant en outre configurée pour afficher au moins une vignette ou icône (226) correspondant à l'au moins une zone à effleurement (222) de l'écran tactile (220) et pour adapter au moins un élément parmi l'orientation et la position de la vignette ou icône affichée (226) sur la base du signal d'orientation indiquant l'orientation actuelle du module d'affichage (200), chaque vignette ou icône (226) indiquant une fonction spécifique qui est activée quand la zone à effleurement respective (222) est touchée ;
une unité de corrélation (240) pour corréler l'au moins une zone à effleurement (222) avec l'au moins une vignette ou icône affichée (226) et avec la fonction touche tactile spécifiée par la vignette ou icône affichée (226) ;
dans lequel les zones à effleurement (222) sont des régions actives de l'écran tactile (220) qui sont activées par contact ou par touche avec un corps de contact ; et
quand le module d'affichage (200) est mis en rotation, la rotation du module d'affichage (200) entraîne la modification d'une même région active de l'écran tactile (220) par rapport à un observateur, chaque vignette ou icône (226) étant adaptée pour s'afficher avec la même orientation et la même position par rapport à l'observateur et étant corrélée avec la région active de l'écran tactile (220) correspondant à l'emplacement où la vignette ou l'icône (226) est affichée de sorte qu'une touche tactile associée à une fonction spécifique soit toujours affichée à la même position ou avec la même orientation par rapport à l'observateur.

2. Dispositif informatique portatif selon la revendication 1, comprenant en outre :
un bloc de touches (400) pour saisir des instructions, dans lequel l'orientation dudit bloc de touches (400) est modifiable, ledit bloc de touches (400) comprenant :
au moins une touche (410) pour saisir des instructions, ladite touche (410) ayant au moins une vignette (420) correspondant à au moins une orientation du bloc de touches (400) ;
au moins un composant d'éclairage (430) pour éclairer chaque vignette (420) correspondant à une orientation du bloc de touches (400) ; et
une unité de commande d'éclairage (440) pour activer de manière sélective le composant d'éclairage (430) en réponse à l'orientation dudit bloc de touches (400).

3. Dispositif informatique portatif selon la revendication 2, comprenant en outre une plaque avant adaptée pour rendre invisible au moins une desdites vignettes (420).

4. Dispositif informatique portatif selon l'une quelconque des revendications 1 à 3, dans lequel
ledit module d'affichage (200) est adapté pour être mis en rotation dans un plan défini par ledit module d'affichage (200) d'une première orientation à une seconde orientation ;
ladite unité de commande (210) est en outre adaptée pour choisir différents contenus d'informations à afficher en fonction de l'orientation du module d'affichage (200).

5. Dispositif informatique portatif selon l'une quelconque des revendications 1 à 4, comprenant en outre :
un moyen d'accès (160) pour accéder à un support de stockage, ledit support de stockage stockant des données de navigation géographiques ; dans lequel
ladite unité de commande (210) est en outre adaptée pour récupérer les données de navigation géographiques du support de stockage via le moyen d'accès (160) et pour déterminer les données de navigation géographiques à afficher sur la base du signal d'orientation indiquant l'orientation du module d'affichage (200).

6. Dispositif informatique portatif selon l'une quelconque des revendications 1 à 5, comprenant en outre :
une unité de détection d'orientation (230) pour détecter automatiquement l'orientation du module d'affichage (200) et pour délivrer en sortie à l'unité de commande (210) le signal d'orientation indiquant l'orientation du module d'affichage (200) ; dans lequel
ladite unité de commande (210) est en outre adaptée pour traiter le signal d'orientation indiquant l'orientation du module d'affichage (200) et pour adapter l'affichage d'informations en réponse au signal d'orientation.

7. Dispositif informatique portatif selon la revendication 6, dans lequel ladite unité de détection comprend un capteur de gravité adapté pour détecter l'orientation spatiale d'un point du module d'affichage (200) par rapport à un autre point du module d'affichage (200).

8. Dispositif informatique portatif selon l'une quelconque des revendications 1 à 7, dans lequel :
ladite interface machine utilisateur (190) est adaptée pour recevoir une entrée de l'orientation du module d'affichage (200) et pour délivrer en sortie à l'unité de commande (210) le signal d'orientation indiquant l'orientation du module d'affichage (200).

9. Dispositif informatique portatif selon l'une quelconque des revendications 1 à 8, dans lequel :
ladite interface machine utilisateur (190) est en outre adaptée pour recevoir une instruction pour activer ou désactiver un mode entre le mode automatique de détection de l'orientation du module d'affichage (200) et le mode manuel d'entrée du signal d'orientation indiquant l'orientation du module d'affichage (200).

10. Dispositif informatique portatif selon l'une quelconque des revendications 1 à 9, dans lequel l'unité de navigation (110), le module d'affichage (200), l'unité de commande (210) et l'interface machine utilisateur (190) sont adaptés pour être intégrés dans une unité de tête de véhicule et sont connectés les uns aux autres par un bus de données.

11. Dispositif informatique portatif selon l'une quelconque des revendications 1 à 10, dans lequel le système de positionnement (120) délivre en sortie à l'unité de navigation (110) des signaux fournis par un système de positionnement par satellite.

12. Procédé d'affichage d'un contenu d'informations sur un dispositif informatique portatif, comprenant :
des signaux de réception indiquant des coordonnées d'emplacement géographique et délivrant en sortie des signaux indiquant un emplacement géographique du dispositif informatique portatif ;
la réception d'un signal d'orientation indiquant une orientation actuelle d'un module d'affichage (200) du dispositif informatique portatif ;
l'adaptation de l'orientation de l'affichage d'un contenu d'informations en réponse au signal d'orientation et l'affichage du contenu d'informations conformément à ladite orientation du module d'affichage (200) ;
l'affichage d'au moins une vignette ou icône (226) correspondant à l'au moins une zone à effleurement (222) de l'écran tactile (220) et l'adaptation d'une orientation et/ou d'une position de la vignette ou de l'icône affichée (226) sur la base du signal d'orientation indiquant l'orientation actuelle du module d'affichage (200) ;
la corrélation de l'au moins une zone à effleurement (222) avec l'au moins une vignette ou icône affichée (226) et avec la fonction spécifiée par la vignette ou l'icône affichée (226).
dans lequel chaque vignette ou icône (226) indique une fonction spécifique qui est activée quand la zone à effleurement respective (222) est touchée ; dans lequel l'étape consistant à adapter ladite orientation et/ou position de la vignette affichée (226) comprend :
quand le module d'affichage (200) est mis en rotation, la rotation du module d'affichage (200) amenant la position d'une même région active sur l'écran tactile (220) à se modifier par rapport à un observateur, en affichant chaque vignette ou icône (226) avec la même orientation et la même position par rapport à l'observateur et en corrélation avec la même région active de l'écran tactile (220) correspondant à l'emplacement auquel la vignette ou l'icône (226) est actuellement affichée de sorte qu'une touche tactile associée à une fonction spécifique soit toujours affichée à la même position ou avec la même orientation par rapport à l'observateur.
